(19) Europäisches Patentamt
European Patent Office
Office européen des brevets

(11) EP 4 692 555 A1

(12) **EUROPEAN PATENT APPLICATION**
published in accordance with Art. 153(4) EPC

(43) Date of publication:
11.02.2026 Bulletin 2026/07

(51) International Patent Classification (IPC):
F04C 28/12 (2006.01)  F25B 1/047 (2006.01)

(21) Application number: 24784200.8

(52) Cooperative Patent Classification (CPC):
Y02B 30/70

(22) Date of filing: 29.03.2024

(86) International application number:
PCT/CN2024/085056

(87) International publication number:
WO 2024/208116 (10.10.2024 Gazette 2024/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.04.2023 CN 202310349248

(71) Applicants:
• York Guangzhou Air Conditioning and
Refrigeration Co., Ltd.
Qingyuan, Guangdong 511685 (CN)
• Tyco Fire & Security GmbH
8212 Neuhausen am Rheinfall (CH)

(72) Inventors:
• ZHAO, Weizheng
Qingyuan, Guangdong 511685 (CN)
• ZENG, Fanfei
Qingyuan, Guangdong 511685 (CN)
• JI, Shicai
Qingyuan, Guangdong 511685 (CN)
• YU, Zhengxiang
Qingyuan, Guangdong 511685 (CN)

(74) Representative: Meissner Bolte Nürnberg
Patentanwälte Rechtsanwälte
Partnerschaft mbB
Bankgasse 3
90402 Nürnberg (DE)

(54) **CONTROL SYSTEM AND CONTROL METHOD THEREOF**

(57) A control system, a control method, and a compressor. The control system (100) comprises: a compressor (102) and a control apparatus (114). The compressor (102) comprises a sliding valve (232) having a plurality of sliding positions, and one sliding position of the sliding valve (232) corresponds to one internal volume ratio of the compressor (102). Under a working condition, the control apparatus (114) is configured to: acquire a volume ratio corrected value under the working condition; acquire an optimal internal volume ratio of the compressor (102) according to the volume ratio corrected value and a system volume ratio; and adjust a sliding position of the sliding valve (232) according to the optimal internal volume ratio of the compressor (102). According to the control system, the optimal internal volume ratio is obtained by acquiring the optimized volume ratio corrected value, thereby adjusting the position of the sliding valve to enable the compressor to operate efficiently.

Fig. 4A

EP 4 692 555 A1

**Description**

**Technical Field**

The present application relates to the field of air-conditioning system control, and in particular to a control system and a control method thereof in an air-conditioning system.

**Background Art**

A screw compressor is a commonly used component in an air-conditioning system. The screw compressor utilizes the mutual meshing of tooth groove volumes of a pair of screw rotors to cause change in a basic element volume formed by a tooth-shaped space to complete the processes of suction, compression and discharge of gas. An internal volume ratio $V_{ic}$ ($V_{ic}=V_s/V_d$) is an important working parameter of the screw compressor, wherein $V_s$ is a volume of a rotor suction chamber and $V_d$ is a volume of a rotor discharge chamber. By adjusting a position of a sliding valve, the size of the volume $V_d$ of the rotor discharge chamber may be adjusted, thereby adjusting the internal volume ratio $V_{ic}$.

**Summary of the Invention**

According to different working conditions of an air-conditioning system, the system has different external volume ratios. It is desirable that an internal volume ratio of a compressor can match the external volume ratio of the air-conditioning system, and a position of a sliding valve is adjusted by taking the external volume ratio of the air-conditioning system as a parameter, so that the pressure of a rotor discharge chamber of the compressor is equal to the discharge pressure of the air-conditioning system, thereby avoiding additional power consumption caused by over-compression or under-compression, and ensuring that the compressor is operated at an optimal efficiency, i.e., a ratio of the system heat exchange volume to the compressor current is maximized.

In a refrigeration cycle system of an air conditioner, an economizer is generally arranged, which is in fluid communication with the compressor through a replenishing port arranged on the compressor, so that a refrigerant from a gas outlet pipe of the economizer can flow into the compressor through the replenishing port for compression, thereby resulting in greater discharge chamber density and pressure of the compressor than those of the compressor without replenishment. Compared with an air-conditioning system which is not provided with the economizer or which has the economizer not operated, if a working condition of the system and the position of the sliding valve of the compressor remain unchanged, due to the increase in the suction volume, the actual internal volume ratio of the compressor will also be increased by the additional refrigerant that enters the compressor from the replenishing port. At this time, if the position of the sliding valve of the compressor is directly adjusted by using the volume ratio of the system as a parameter, the compressor will be over-compressed, thereby resulting in low compressor operating efficiency and increase in vibration and noise.

Therefore, in a specific unit operating working condition, in order to ensure that the compressor is operated at an optimal efficiency, an optimized adjustment position of the sliding valve of the compressor needs to be obtained, i.e., an optimized adjustment parameter of the position of the sliding valve needs to be obtained to adjust the sliding valve, so that the actual internal volume ratio of the compressor is equal to an optimal internal volume ratio under the working condition, so that the overall performance of the unit reaches the highest. Specifically, in the present application, the optimal operating efficiency of the compressor is tested through a parameter approximation method, and a volume ratio corrected value at which the compressor is operated at the optimal efficiency is reversely derived, thereby obtaining the optimal internal volume ratio of the compressor under the working condition; the position of the sliding valve is adjusted according to the optimal internal volume ratio of the compressor; and finally, the obtained volume ratio corrected value under the working condition is stored in a control apparatus for direct access and use under the same working condition in the future.

Specifically, according to a first aspect of the present application, a control system is provided. The control system is used for controlling an air-conditioning system, and under a working condition, the air-conditioning system has a system volume ratio, wherein the control system comprises a compressor and a control apparatus, the compressor comprises a sliding valve having a plurality of sliding positions, and one sliding position of the plurality of sliding positions of the sliding valve corresponds to one internal volume ratio of the compressor; under the working condition, the control apparatus is configured to: acquire a volume ratio corrected value under the working condition; acquire an optimal internal volume ratio of the compressor according to the volume ratio corrected value and the system volume ratio; and adjust a sliding position of the sliding valve according to the optimal internal volume ratio of the compressor.

According to the first aspect of the present application, wherein the control system further comprises: a plurality of sensors, wherein the plurality of sensors determine the working condition and the system volume ratio.

According to the first aspect of the present application, wherein the control system further comprises: an evaporator, wherein the evaporator is fluidically connected to the compressor; wherein the plurality of sensors comprise:

an entering water temperature sensor, a leaving water temperature sensor and an environmental temperature sensor; the entering water temperature sensor is used for detecting an entering water temperature of the evaporator; the leaving water temperature sensor is used for detecting a leaving water temperature of the evaporator; and the environmental temperature sensor is used for detecting an environmental temperature of the control system.

According to the first aspect of the present application, wherein the compressor further comprises a screw, and the control apparatus is configured to be capable of acquiring a rotational speed of the screw; and the control apparatus determines the working condition from the environmental temperature, the entering water temperature, the leaving water temperature, and the rotational speed of the screw that are measured.

According to the first aspect of the present application, wherein the plurality of sensors further comprise: a system suction pressure sensor, wherein the system suction pressure sensor is used for detecting a suction pressure of the control system; and a system discharge pressure sensor, wherein the system discharge pressure sensor is used for detecting a discharge pressure of the control system, wherein the control apparatus determines the system volume ratio from the suction pressure and the discharge pressure that are measured.

According to the first aspect of the present application, wherein the control apparatus is further configured to be capable of acquiring a current parameter of the compressor, and a coefficient of performance of the air-conditioning system can be acquired according to the current parameter, the entering water temperature, and the leaving water temperature, wherein when the compressor is at the optimal internal volume ratio, the coefficient of performance of the air-conditioning system is maximized.

According to the first aspect of the present application, wherein the control system further comprises: an economizer, wherein the economizer is fluidically connected to the compressor; wherein when the economizer is in an off-state, an optimal volume ratio is equal to the system volume ratio.

According to the first aspect of the present application, wherein when the economizer is in an on-state, it is determined whether the control apparatus has stored therein the volume ratio corrected value corresponding to the working condition.

According to the first aspect of the present application, wherein if the control apparatus has stored therein the volume ratio corrected value corresponding to the working condition, the optimal internal volume ratio is acquired according to the volume ratio corrected value and the system volume ratio, and a sliding position of the sliding valve is adjusted according to the optimal internal volume ratio.

According to the first aspect of the present application, wherein if the control apparatus hasn't stored therein the volume ratio corrected value corresponding to the working condition, the volume ratio corrected value is acquired by the following steps: step 1, setting a first temporary volume ratio corrected value, adjusting a sliding position of the sliding valve according to the first temporary volume ratio corrected value, and after the air-conditioning system operates for a period of time, acquiring a coefficient of performance of the air-conditioning system; step 2, reducing the first temporary volume ratio corrected value to obtain a second temporary volume ratio corrected value, adjusting a sliding position of the sliding valve according to the second temporary volume ratio corrected value, after the air-conditioning system operates for the period of time, acquiring a coefficient of performance of the air-conditioning system, and assigning the first temporary volume ratio corrected value to the volume ratio corrected value; step 4, if a unit coefficient of performance acquired in step 2 is [missing value], reducing the second temporary volume ratio corrected value to obtain a third temporary volume ratio corrected value, adjusting a sliding position of the sliding valve according to the third temporary volume ratio corrected value, after the air-conditioning system operates for the period of time, acquiring a coefficient of performance of the air-conditioning system, and assigning the second temporary volume ratio corrected value to the volume ratio corrected value; and step 6, if a unit coefficient of performance acquired in step 4 is [missing value], repeating step 4 until a unit coefficient of performance acquired in a subsequent repetition is less than a unit coefficient of performance acquired in a preceding repetition prior to the subsequent repetition, and assigning a temporary volume ratio corrected value obtained in the preceding repetition to the volume ratio corrected value.

According to the first aspect of the present application, wherein the compressor further comprises: a suction port, a replenishing port, a discharge port, and a sliding valve displacement sensor, wherein the control apparatus adjusts a sliding position of the sliding valve through the sliding valve displacement sensor, and wherein the economizer is connected to the compressor through the replenishing port.

According to the first aspect of the present application, wherein the control system further comprises: a suction pipe, a discharge pipe, a condenser, an economizer expansion valve, and a main expansion valve, wherein the suction pipe is connected to the suction port of the compressor, wherein the system suction pressure sensor is arranged at the suction pipe, and the evaporator is connected to the compressor through the suction pipe; the discharge pipe is connected to the discharge port of the compressor, wherein the system discharge pressure sensor is arranged at the discharge pipe; the condenser is connected to the compressor through the discharge pipe, and is in fluid communication with the economizer; the economizer expansion valve is in fluid communication with the condenser and the economizer; and the main expansion valve is in fluid communication with the evaporator and the economizer.

According to a second aspect of the present application, a control method for controlling a compressor in a control system is provided. The compressor comprises a sliding valve, the control system comprises a control apparatus, and the control method comprises the following steps: determining a working condition and a system volume ratio of the control system; acquiring a volume ratio corrected value under the working condition; acquire an optimal internal volume ratio of the compressor according to the volume ratio corrected value and the system volume ratio; and adjust a sliding position of the sliding valve according to the optimal internal volume ratio of the compressor.

According to the second aspect of the present application, wherein the control system further comprises: a plurality of sensors, and the working condition and the system volume ratio of the control system are determined through the plurality of sensors.

According to the second aspect of the present application, wherein the control system further comprises: an evaporator, wherein the evaporator is fluidically connected to the compressor; wherein the plurality of sensors comprise: an entering water temperature sensor, a leaving water temperature sensor and an environmental temperature sensor, and the entering water temperature sensor is used for detecting an entering water temperature of the evaporator; the leaving water temperature sensor is used for detecting a leaving water temperature of the evaporator; and the environmental temperature sensor is used for detecting an environmental temperature of the control system.

According to the second aspect of the present application, wherein the compressor further comprises a screw, and the control apparatus is configured to be capable of acquiring a rotational speed of the screw; and the control apparatus determines the working condition from the environmental temperature, the entering water temperature, the leaving water temperature, and the rotational speed of the screw that are measured.

According to the second aspect of the present application, wherein the plurality of sensors further comprise: a system suction pressure sensor, wherein the system suction pressure sensor is used for detecting a suction pressure of the control system; and a system discharge pressure sensor, wherein the system discharge pressure sensor is used for detecting a discharge pressure of the control system, wherein the control apparatus determines the system volume ratio from the suction pressure and the discharge pressure that are measured.

According to the second aspect of the present application, wherein the control apparatus is further configured to be capable of acquiring a current parameter of the compressor, and a coefficient of performance of the air-conditioning system can be acquired according to the current parameter, the entering water temperature and the leaving water temperature, wherein when the compressor is at the optimal internal volume ratio, the coefficient of performance of the air-conditioning system is maximized.

According to the second aspect of the present application, wherein the control system further comprises: an economizer, wherein the economizer is fluidically connected to the compressor; wherein when the economizer is in an off-state, an optimal volume ratio is equal to the system volume ratio.

According to the second aspect of the present application, wherein when the economizer is in an on-state, it is determined whether the control apparatus has stored therein the volume ratio corrected value corresponding to the working condition.

According to the second aspect of the present application, wherein if the control apparatus has stored therein the volume ratio corrected value corresponding to the working condition, the optimal internal volume ratio is acquired according to the volume ratio corrected value and the system volume ratio, and a sliding position of the sliding valve is adjusted according to the optimal internal volume ratio.

According to the second aspect of the present application, wherein if the control apparatus hasn't stored therein the volume ratio corrected value corresponding to the working condition, the volume ratio corrected value is acquired by the following steps: step 1, setting a first temporary volume ratio corrected value, adjusting a sliding position of the sliding valve according to the first temporary volume ratio corrected value, and after the air-conditioning system operates for a period of time, acquiring a coefficient of performance of the air-conditioning system; step 2, reducing the first temporary volume ratio corrected value to obtain a second temporary volume ratio corrected value, adjusting a sliding position of the sliding valve according to the second temporary volume ratio corrected value, after the air-conditioning system operates for the period of time, acquiring a coefficient of performance of the air-conditioning system, and assigning the first temporary volume ratio corrected value to the volume ratio corrected value; step 4, if a unit coefficient of performance acquired in step 2 is [missing value], reducing the second temporary volume ratio corrected value to obtain a third temporary volume ratio corrected value, adjusting a sliding position of the sliding valve according to the third temporary volume ratio corrected value, after the air-conditioning system operates for the period of time, acquiring a coefficient of performance of the air-conditioning system, and assigning the second temporary volume ratio corrected value to the volume ratio corrected value; and step 6, if a unit coefficient of performance acquired in step 4 is [missing value], repeating step 4 until a unit coefficient of performance acquired in a subsequent repetition is less than a unit coefficient of performance acquired in a preceding repetition prior to the subsequent repetition, and assigning a temporary volume ratio corrected value obtained in the preceding repetition to the volume ratio corrected value.

According to the second aspect of the present application, wherein the compressor further comprises: a suction port, a replenishing port, a discharge port, and a sliding valve displacement sensor, wherein the control apparatus adjusts a sliding position of the sliding valve through the sliding valve displacement sensor, and wherein the economizer is connected to the compressor through the replenishing port.

According to the second aspect of the present application, wherein the control system further comprises: a suction pipe, a discharge pipe, a condenser, an economizer expansion valve, and a main expansion valve; the suction pipe is connected to the suction port of the compressor, wherein the system suction pressure sensor is arranged at the suction pipe, and the evaporator is connected to the compressor through the suction pipe; the discharge pipe is connected to the discharge port of the compressor, wherein the system discharge pressure sensor is arranged at the discharge pipe; the condenser is connected to the compressor through the discharge pipe, and is in fluid communication with the economizer; the economizer expansion valve is in fluid communication with the condenser and the economizer; and the main expansion valve is in fluid communication with the evaporator and the economizer.

According to a third aspect of the present application, a compressor is provided, and the compressor is the compressor in any one of the first aspect of the present application.

According to a fourth aspect of the present application, a compressor is provided, and the compressor is adjusted by the control method in any one of the second aspect of the present application.

Other features, advantages and embodiments of the present application may be set forth or become apparent by consideration of the following detailed description, accompanying drawings and claims. In addition, it should be understood that the above summaries of the invention and the following specific embodiments are all exemplary and intended to provide further explanations rather than limit the scope of the present application to be claimed. However, the detailed description and specific examples indicate only preferred embodiments of the present application. Various changes and modifications within the spirit and scope of the present application will become apparent to those skilled in the art from this detailed description.

**Brief Description of the Drawings**

Fig. 1 is a structural schematic diagram of an air-conditioning system 100 according to an embodiment of the present application;
Fig. 2 is a structural schematic diagram of a compressor 102 when a sliding valve is in a first position;
Fig. 3 is a structural schematic diagram of a compressor 102 when a sliding valve is in a second position;
Fig. 4A and Fig. 4B are flow charts of a control method;
Fig. 5 is a schematic diagram of a unit performance change trend of a compressor at different internal volume ratios;
Fig. 6 is a structural block diagram of a control apparatus 114 shown in Fig. 1.

**Detailed Description of Embodiments**

Various specific embodiments of the present application will be described below with reference to the accompanying drawings, which constitute a part of the specification. It should be understood that although terms, such as "front", "rear", "upper", "lower", "left", "right", etc., that represent directions are used in the present application to describe various example structural parts and elements of the present application, these terms used herein are determined based on example orientations shown in the accompanying drawings for ease of illustration only. Since the embodiments disclosed in the present application may be disposed in different directions, these terms that represent directions are for illustration only and should not be regarded as limiting.

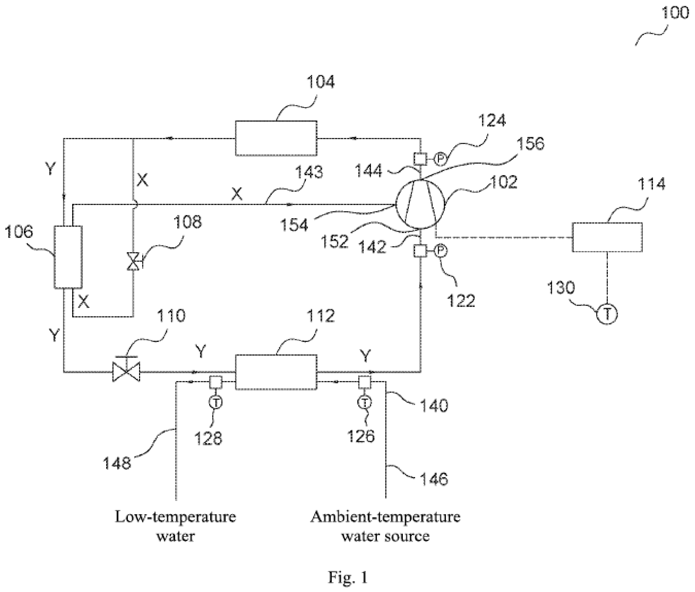

Fig. 1 shows a structural schematic diagram of an air-conditioning system 100 according to the present application.

As shown in Fig. 1, taking a refrigeration system as an example, the air-conditioning system 100 of the present application comprises a compressor 102, a condenser 104, an economizer 106, an economizer expansion valve 108, a main expansion valve 110, and an evaporator 112, which are in fluid communication in sequence, wherein the compressor 102 has a suction port 152, a replenishing port 154, and a discharge port 156; the suction port 152 of the compressor 102 is in fluid communication with the evaporator 112 through a suction pipe 142; the replenishing port 154 of the compressor 102 is in fluid communication with the economizer 106 through a replenishing pipe 143; the discharge port 156 of the compressor 102 is in fluid communication with the condenser 104 through a discharge pipe 144; the condenser 104 is in fluid communication with the economizer 106 and the economizer expansion valve 108; the economizer 106 is in fluid communication with the main expansion valve 110; and the main expansion valve 110 is in fluid communication with the evaporator 112.

The air-conditioning system 100 exchanges heat with water in a water pipe 140 at the evaporator 112. However, a refrigerant in the evaporator 112 and the water in the water pipe 140 are in different pipelines respectively and are not in fluid communication with each other. The water pipe 140 comprises a water inlet pipe 146 and a water outlet pipe 148. An ambient-temperature water source may flow through the water inlet pipe 146 to the vicinity of the evaporator 112 for heat exchange.

The air-conditioning system 100 further comprises a system suction pressure sensor 122, a system discharge pressure sensor 124, an entering water temperature sensor 126, and a leaving water temperature sensor 128. The system suction pressure sensor 122 is arranged on a suction pipe 142 between the suction port 152 of the compressor 102 and the evaporator 112, and is used for detecting a suction pressure $P_s$ of the air-conditioning system 100; and the system discharge pressure sensor 124 is arranged on a discharge pipe 144 between the discharge port 156 of the compressor 102 and the condenser 104, and is used for detecting a discharge pressure $P_d$ of the air-conditioning system 100. An external volume ratio $V_{is}$ of the air-conditioning system 100 may be calculated from the suction pressure $P_s$ and the discharge pressure $P_d$. The entering water temperature sensor 126 is arranged on the water inlet pipe 146, and is used for detecting an entering water temperature $T_{ew}$ of the evaporator 112; and the leaving water temperature sensor 128 is arranged on the water outlet pipe 148, and is used for detecting a leaving water temperature $T_{lw}$ of the evaporator 112.

Also referring to Fig. 1, a high-temperature and high-pressure gaseous refrigerant discharged from the discharge port 156 of the compressor 102 enters the condenser 104, and releases heat to condense as a medium-temperature liquid refrigerant. A part X of the medium-temperature liquid refrigerant flows to the economizer expansion valve 108, and the other part Y flows to the economizer 106. After the liquid refrigerant X is subjected to throttling and pressure reduction by the economizer expansion valve 108, a low-temperature gas-liquid two-phase refrigerant X is formed. The refrigerant X flowing out of the economizer expansion valve 108 flows to the economizer 106 and exchanges heat with the medium-temperature liquid refrigerant Y flowing into the economizer 106. In the economizer 106, the medium-temperature liquid refrigerant Y and the low-temperature gas-liquid two-phase refrigerant X are fluidically isolated from each other and are not in fluid communication with each other. After heat exchange occurs, the medium-temperature liquid refrigerant Y is further cooled and flows to the main expansion valve 110; and the low-temperature gas-liquid two-phase refrigerant X evaporates into a gaseous refrigerant X and returns to the compressor 102 through the replenishing port 154 of the compressor 102. After the low-temperature liquid refrigerant Y is subjected to throttling and pressure reduction by the main expansion valve 110, a low-temperature gas-liquid two-phase refrigerant Y is formed and enters the evaporator 112. In the evaporator 112, the low-temperature gas-liquid two-phase refrigerant Y exchanges heat with ambient-temperature water from the water inlet pipe 146, absorbs the heat of the water to evaporate into a gaseous refrigerant Y, and finally returns to the compressor 102 through the suction port 152 of the compressor 102 to complete the cyclic flow of the refrigerant. The ambient-temperature water in the water inlet pipe 146 exchanges heat with the low-temperature gas-liquid two-phase refrigerant Y in the evaporator 112. After the heat is released, low-temperature water is formed and flows out of the water outlet pipe 148 to complete the heat exchange between the water and the refrigerant.

The air-conditioning system 100 further comprises a compressor control system, the compressor control system comprises a control apparatus 114, and the control apparatus 114 is provided with an environmental temperature sensor 130 used for detecting an environmental temperature $T_e$ of the unit of the air-conditioning system 100. The system suction pressure sensor 122, the system discharge pressure sensor 124, the entering water temperature sensor 126, the leaving water temperature sensor 128 and the environmental temperature sensor 130 are in communication connection with the control apparatus 114 respectively, and various detected parameters may be transmitted to the control apparatus 114.

The control apparatus 114 may adjust the position of the sliding valve in real time according to the optimal internal volume ratio of the compressor 102, so that the pressure (i.e., internal pressure) of the rotor discharge chamber of the compressor 102 is matched with the discharge pressure (i.e., external pressure) of the air-conditioning system, thereby avoiding over-compression or under-compression, so as to improve the operating efficiency of the air-conditioning system 100 and reducing energy consumption. Specifically, under a specific operating working condition, a corrected internal volume ratio of the compressor, i.e., the optimal internal volume ratio of the compressor 102 under the current working condition, is obtained by acquiring the volume ratio corrected value pre-stored in the control apparatus 114, and the position of the sliding valve is adjusted according to the optimal internal volume ratio, so that the operating efficiency of the air-conditioning system 100 is maximized. If the control apparatus 114 hasn't stored therein the corresponding volume ratio corrected value, the volume ratio corrected value under the working condition needs to be derived reversely by operating the air-conditioning system 100 under optimal unit performance in advance (the pressure of the rotor discharge chamber of the compressor 102 is consistent with the discharge pressure of the air-conditioning system 100, without over-compression or under-compression), so as to obtain the optimal internal volume ratio of the compressor under the working condition; the position of the sliding valve is adjusted according to the optimal internal volume ratio of the compressor; and finally, the obtained volume ratio corrected value under the working condition is stored in the control apparatus 114 for direct access and use under the same working condition in the future.

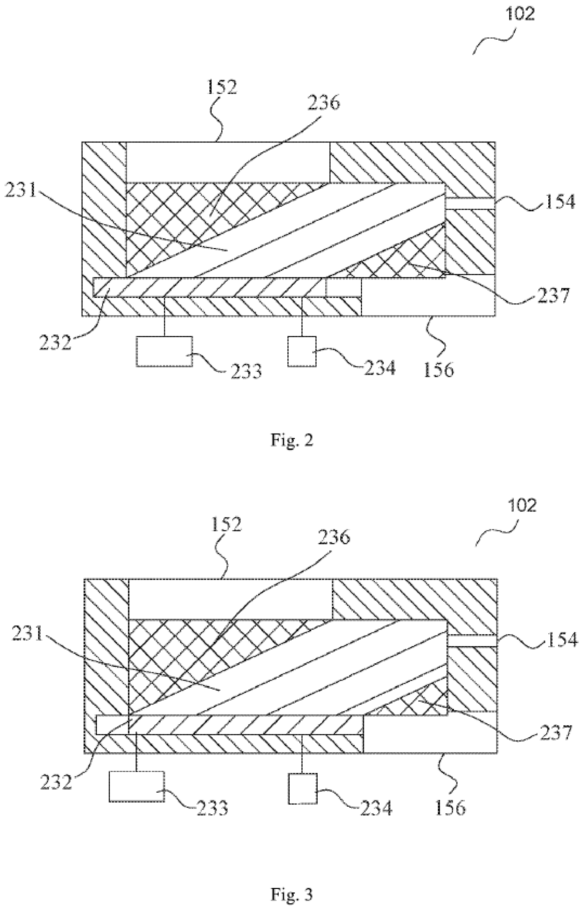

Figs. 2-3 are structural schematic diagrams of the compressor 102 when a sliding valve 232 is in a first position and a second position, respectively.

As shown in Fig. 2 and Fig. 3, the compressor 102 comprises a suction chamber 236, a discharge chamber 237, and a compression chamber 231; the suction chamber 236 is in fluid communication with the suction pipe 142 through the suction port 152; and the discharge chamber 237 is in fluid communication with the discharge pipe 144 through the discharge port 156. The compressor 102 further comprises a screw (not shown), the compression chamber 231 is formed by tooth grooves of a pair of screw rotors, and the compression chamber 231 is in fluid communication with the suction chamber 236 and the discharge chamber 237. The replenishing port 154 is in fluid communication with the compression chamber 231. Thus, the refrigerant in the suction pipe 142 can enter the suction chamber 236 through the suction port 152 and then enter the compression chamber 231 for compression, and the refrigerant in the air replenishing pipe 143 can also flow into the compression chamber 231 through the replenishing port 154 for compression. After two parts of the refrigerants are compressed, the refrigerants enter the discharge chamber 237 together and are finally discharged into the discharge pipe 144 through the discharge port 156 to complete the compression process of the compressor 102.

The compressor 100 further comprises a sliding valve 232, a driving apparatus 233 and a sliding valve displacement sensor 234, and the driving apparatus 233 is mechanically connected to the sliding valve 232 to drive the sliding valve 232 to move. In the embodiment of the present application, the driving apparatus 233 is a hydraulic driving apparatus, and for those ordinary skilled in the art, the driving apparatus 233 may also be driven in other ways. The control apparatus 114 is in communication connection with the driving apparatus 233 and the sliding valve displacement sensor 234 respectively. Therefore, the control apparatus 114 may detect a current position of the sliding valve 232 through the sliding valve displacement sensor 234, and may drive the sliding valve 232 to move to a target position by controlling the driving apparatus 233.

The sliding valve 232 has a first position corresponding to a minimum internal volume ratio of the compressor 102, and a second position corresponding to a maximum internal volume ratio of the compressor 102. Specifically, when the sliding valve 232 moves to a leftmost position (i.e., the first position) shown in Fig. 2, the discharge chamber 237 has a largest discharge chamber volume. According to a formula of the internal volume ratio of the compressor: $V_{ic}=V_s/V_d$ (where $V_{ic}$ represents the internal volume ratio of the compressor, $V_s$ represents the volume of the rotor suction chamber and $V_d$ represents the volume of the rotor discharge chamber), the compressor thus has a minimum internal volume ratio. When the sliding valve 232 moves to a rightmost position (i.e., the second position) shown in Fig. 3, the discharge chamber 237 has a minimum discharge chamber volume. According to the above formula of the internal volume ratio of the compressor, the compressor thus has a maximum internal volume ratio. The driving apparatus 233 is used for controlling the sliding valve 232 to move between the first position and the second position to adjust the volume size of the discharge chamber 237, thereby adjusting the internal volume ratio $V_{ic}$ of the compressor 102. The sliding valve displacement sensor 234 may detect a specific position of the sliding valve 232 between the first position and the second position, and feed the position of the sliding valve back to the control apparatus 114, so as to drive the sliding valve 232 to move through the driving apparatus 233.

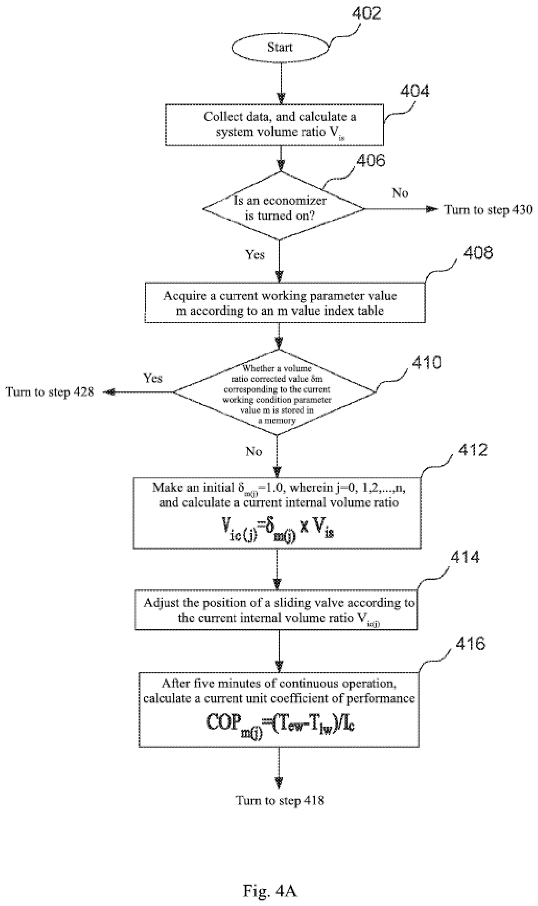

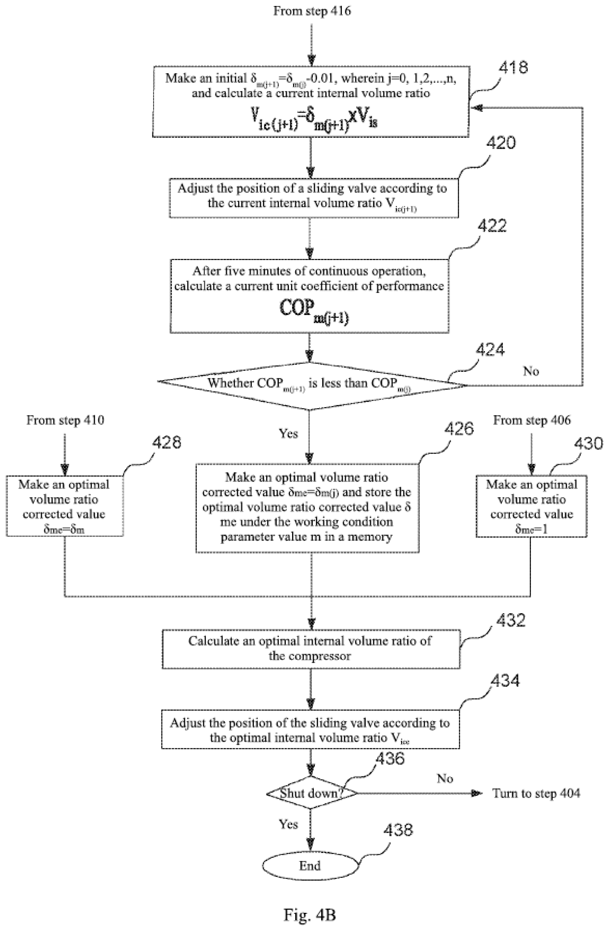

Fig. 4A and Fig. 4B are flow charts of a control method of a control system of a compressor.

As shown in Fig. 4A, at step 402, a program starts.

At step 404, the control apparatus 114 acquires the suction pressure $P_s$ of the suction pipe 142, the discharge pressure $P_a$ of the discharge pipe 144, the entering water temperature $T_{ew}$ of the water inlet pipe 146, the leaving water temperature $T_{lw}$ of the water outlet pipe 148 and the environmental temperature $T_e$ of the air-conditioning system unit respectively through the system suction pressure sensor 122, the system discharge pressure sensor 124, the entering water temperature sensor 126, the leaving water temperature sensor 128 and the environmental temperature sensor 130. The control apparatus 114 may also detect the rotational speed R of the screw of the compressor 102 and the current parameter $I_c$ of the compressor 102, and calculate the system volume ratio $V_{is}$ according to the suction pressure $P_s$ and the discharge pressure $P_q$ by formula:

$$V_{is} = \left(\frac{P_d}{P_s}\right)^{\frac{1}{k}},$$

where k is an adiabatic constant of a medium, which is related to the material of the refrigerant in an air-conditioning refrigeration system. Adiabatic constants of media of some common refrigerants are shown in Table 1 below.

Table 1 Adiabatic Constants of Media of Common Refrigerants

| Refrigerant Type | R134a | R513A | R410A | R22 | R1234yf |
|---|---|---|---|---|---|
| Adiabatic Constants of Media | 0.85 | 0.86 | 0.78 | 0.79 | 0.87 |

After the operation of step 404 is completed, the process turns to step 406.

At step 406, it is determined whether the economizer 106 of the air-conditioning system 100 is turned on. If the economizer 106 is not turned on, by making the internal volume ratio $V_{ic}$ of the compressor consistent with the external volume ratio $V_{is}$ of the air-conditioning system, the pressure of the rotor discharge chamber of the compressor may be consistent with the discharge pressure of the air-conditioning system. The process turns to step 430 in Fig. 4B.

At step 430, at this time, the optimal internal volume ratio $V_{ice}$ of the compressor 102 is equal to the external

volume ratio $V_{is}$ of the air-conditioning system, so 1 is directly assigned to the optimal internal volume ratio corrected value $\delta_{me}$ of the compressor 102. After the operation of step 430 is completed, the process turns to step 432.

If the economizer 106 is turned on, the refrigerant discharged from the economizer 106 comprises the refrigerant suctioned from the replenishing port 154 of the compressor 102 in addition to the refrigerant suctioned from the suction port 152 of the compressor 102. Therefore, compared with a refrigeration system that does not comprise an economizer, when the sliding valve of the compressor 102 is in the same position, and under the same system working conditions and suction pressure, the volume of the refrigerant discharged from the discharge port 156 of the compressor 102 remains unchanged, while mass and density are increased, so that the pressure of the rotor discharge chamber of the compressor 102 is greater than the discharge pressure of the air-conditioning system 100, resulting in undesirable over-compression of the compressor 102, thereby resulting in low operating efficiency of the compressor 102. Therefore, the position of the sliding valve of the compressor 102 needs to be readjusted to avoid adverse conditions. At this time, the process turns to step 408.

At step 408, the current working condition is confirmed. Specifically, according to the entering water temperature $T_{ew}$, the leaving water temperature $T_{lw}$, the environmental temperature $T_e$ and the rotational speed R of the screw acquired in step 404, a current working condition parameter value m is acquired through Table 2 below.

Table 2 m Value Index Table

| Serial Number r | Unit Load (%) | Rotational Speed R of Screw (r/min) | Environmenta l Temperature $T_e$ (°C) | Entering Water Temperatur e $T_{ew}$(°C) | Leaving Water Temperatur e $T_{lw}$ (°C) | m |
|---|---|---|---|---|---|---|
| 1 | 10 | 300 | 10 | 10 | 10 | 09090909 |
| 2 | 20 | 600 | 20 | 20 | 10 | 19191909 |
| 3 | 30 | 900 | 30 | 10 | 10 | 29290909 |
| 4 | 40 | 1200 | 40 | 20 | 10 | 39391909 |
| 5 | 50 | 1500 | 10 | 10 | 10 | 49090909 |
| 6 | 60 | 1800 | 20 | 20 | 10 | 59191909 |
| 7 | 70 | 2100 | 30 | 10 | 10 | 69290909 |
| 8 | 80 | 2400 | 40 | 20 | 10 | 79391909 |
| 9 | 90 | 2700 | 10 | 10 | 10 | 89090909 |
| 10 | 100 | 3000 | 20 | 20 | 10 | 99191909 |

The current working condition parameter value m is formed by 8 decimal digits. The first and second digits from right to left are a leaving water temperature parameter value minus 1, the third and fourth digits are an entering water temperature parameter value minus 1, the fifth and sixth digits are an environmental temperature parameter value minus 1, and the seventh and eighth digits are a unit load parameter value minus 1.

After the operation of step 408 is completed, the process turns to step 410.

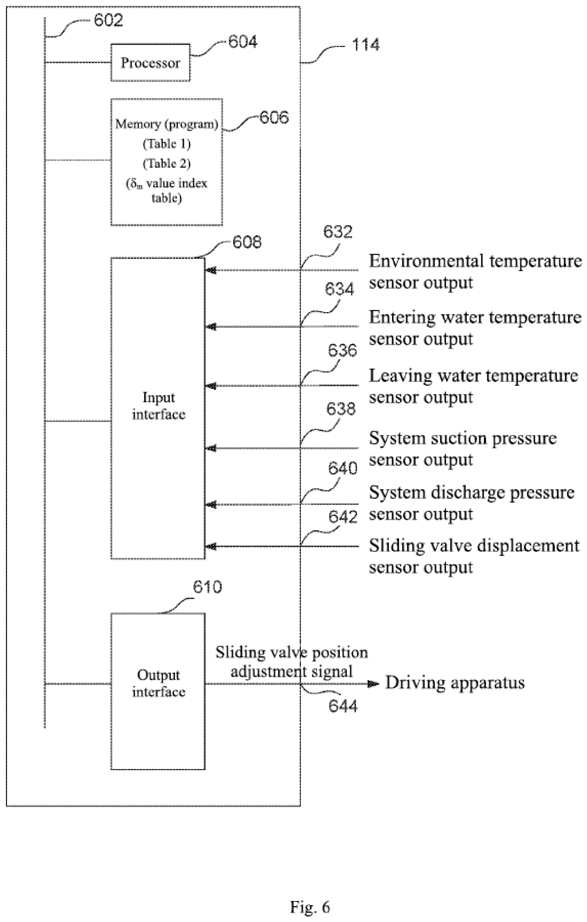

When the air-conditioning system 100 is first operated, a memory 606 (as shown in Fig. 6) of the control apparatus 114 hasn't stored therein the volume ratio corrected value $\delta_m$ corresponding to any working condition parameter value m. As the air-conditioning system 100 is repeatedly operated under different working conditions, the volume ratio corrected value $\delta_m$ under different working conditions is acquired gradually and stored by the control apparatus 114. When the air-conditioning system 100 encounters the same working condition again, the control apparatus 114 may directly access the previously stored volume ratio corrected value $\delta_m$ under the working condition from the memory 606, and then calculate the optimal internal volume ratio $V_{ice}$ of the compressor 102 under the working condition to adjust the position of the sliding valve.

Therefore, at step 410, it needs to determine whether the memory 606 has stored therein a volume ratio corrected value $\delta_m$ corresponding to the current working condition parameter value m acquired in step 408. If the memory 606 has stored therein the volume ratio corrected value $\delta_m$ corresponding to the current working condition parameter value m acquired in step 406, the process turns to step 428 in Fig. 4B.

In step 428, the volume ratio corrected value $\delta_m$, stored in the memory 606, corresponding to the current working condition parameter value m is assigned to the optimal internal volume ratio corrected value $\delta_{me}$ of the compressor 102. After the operation of step 428 is completed, the process turns to step 432.

If the memory 606 hasn't stored therein the volume ratio corrected value $\delta_m$ corresponding to the current working condition parameter value m acquired in step 408, the process turns to step 412 to continue to acquire the volume ratio

corrected value $\delta_m$ corresponding to the current working condition parameter value m.

At step 412, an initial temporary volume ratio corrected value $\delta_{m(j)}$ is set and assigned 1.0, where j=0, 1, 2, ..., n, e.g. $\delta_{m(0)}$=1.0. Based on the initial temporary volume ratio corrected value $\delta_{m(j)}$, the current internal volume ratio $V_{ic(j)}$ of the compressor 102 is calculated by formula:

$$V_{ic(j)} = \delta_{m(j)} \times V_{is},$$

After the operation of step 412 is completed, the process turns to step 414.

At step 414, a sliding valve position is adjusted according to the current internal volume ratio $V_{ic(j)}$ of the compressor102 obtained in step 412. After the operation of step 414 is completed, the process turns to step 416.

At step 416, the air-conditioning system 100 is allowed to operate for 5 minutes at the sliding valve position adjusted in step 414, and then the entering water temperature $T_{ew}$, the leaving water temperature $T_{lw}$ and the current parameter $I_c$ of the compressor 102 are acquired again to calculate the current unit coefficient of performance $COP_{m(j)}$ by formula:

$$COP_{m(j)} = \frac{|T_{ew} - T_{lw}|}{I_c},$$

After the operation of step 416 is completed, the process turns to step 418.

At step 418 as shown in FIG 4B, the initial temporary volume ratio corrected value $\delta_{m(j)}$ set in step 412 is subtracted by 0.01, and the resulting difference is the second temporary volume ratio corrected value $\delta_{m(j+1)}$, for example, $\delta_{m(1)} = \delta_{m(0)}$ -0.01. The current internal volume ratio $V_{ic(j+1)}$ of the compressor102 is calculated based on the second temporary volume ratio corrected value $\delta_{m(j+1)}$ by formulae:

$$\delta_{m(j+1)} = \delta_{m(j)} - 0.01,$$

$$V_{ic(j+1)} = \delta_{m(j+1)} \times V_{is},$$

After the operation of step 418 is completed, the process turns to step 420.

At step 420, the position of the sliding valve is adjusted according to the current internal volume ratio $V_{ic(j+1)}$ of the compressor 102 obtained in step 418. After the operation of step 420 is completed, the process turns to step 422.

At step 422, the air-conditioning system 100 is allowed to continuously operate for 5 minutes at the position of the sliding valve adjusted in step 420, and then the entering water temperature $T_{ew}$, the leaving water temperature $T_{lw}$ and current parameter $I_c$ of the compressor 102 are acquired again to calculate the current unit coefficient of performance $COP_{m(j+1)}$.

After the operation of step 422 is completed, the process turns to step 424.

At step 424, $COP_{m(j)}$ obtained in step 416 is compared with $COP_{m(j+1)}$ obtained in step 422. If $COP_{m(j+1)}$ is less than $COP_{m(j)}$, the process turns to step 426; and if $COP_{m(j+1)}$ is greater than $COP_{m(j)}$,the process turns to step 418, and the operations from step 418 to step 424 are repeated until the unit coefficient of performance $COP_{m(j+1)}$ acquired in a subsequent repetition is less than the unit coefficient of performance $COP_{m(j)}$ acquired in a preceding repetition prior to the subsequent repetition so as to turn to step 426.

At step 426, the previous temporary volume ratio corrected value $\delta_{m(j)}$ of the temporary volume ratio corrected value obtained at last is assigned to the optimal volume ratio corrected value $\delta_{me}$, and the optimal volume ratio corrected value $\delta_{me}$ corresponding to the working condition parameter value m in step 408 is stored in the memory 606, i.e., $\delta_{me}$=$\delta_{m(j)}$.

After the operation of step 426 is completed, the process turns to step 432.

At step 432, the optimal internal volume ratio $V_{ice}$ of the compressor 102 is calculated according to the optimal volume ratio corrected value $\delta_{me}$ obtained in step 426, step 428 and step 430 respectively by formula:

$$V_{ice} = \delta_{me} \times V_{is},$$

After the operation of step 432 is completed, the process turns to step 434.

At step 434, the position of the sliding valve is adjusted according to the optimal internal volume ratio $V_{ice}$ of compressor 102 obtained in step 432. After the operation of step 434 is completed, the process turns to step 436.

At step 436, it is determined whether a shutdown operation is performed. If the shutdown is required, the process turns to step 438 to end the operation process. If no shutdown is required, the process turns to step 404 and the above steps are re-operated.

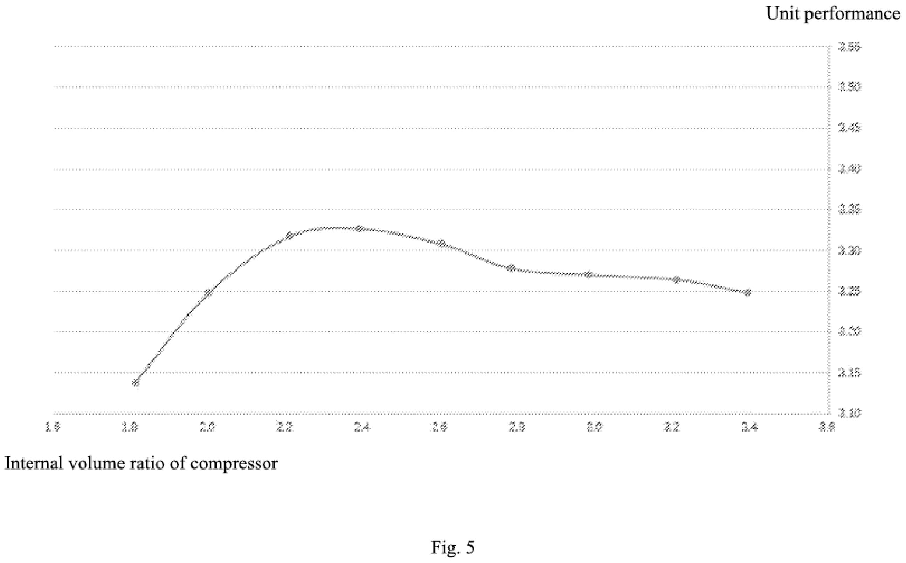

Fig. 5 is a schematic diagram of a unit performance change trend of a compressor at different internal volume ratios.

As shown in Fig. 5, under a certain definite working condition, a horizontal coordinate is a different value of the internal volume ratio $V_{ic}$ of the compressor, and a vertical coordinate is a different value of the unit coefficient of performance COP of the air-conditioning system. It can be seen that the internal volume ratio $V_{ic}$ of the compressor 102 is in an open downward parabolic relationship with the unit coefficient of performance COP of the air-conditioning system. From step 418 of Fig. 4B, it can be seen that in the process of obtaining the optimal internal volume ratio $V_{ice}$ of the compressor, the value of the internal volume ratio $V_{ic}$ of the compressor is gradually reduced, and the volume ratio corrected value $\delta_m$ that maximizes the unit coefficient of performance COP is gradually found through a method of parameter approximation, so as to obtain a corresponding internal volume ratio of the compressor as the optimal internal volume ratio $V_{ice}$. Looking from right to left on the horizontal coordinate in Fig. 5, the unit coefficient of performance COP first increases and then decreases, and reaches a maximum near the value 2.3 of the internal volume ratio $V_{ic}$ (that is, the optimal internal volume ratio $V_{ice}$ is roughly 2.3). The value of the internal volume ratio $V_{ic}$ near 2.2 to 2.4 corresponds to steps 424 to 426 in Fig. 4B, that is, when the unit coefficient of performance COP tends to decrease, the volume ratio corrected value $\delta_m$ obtained last time is used as the optimal volume ratio corrected value $\delta_{me}$ to calculate the optimal internal volume ratio $V_{ice}$ of the compressor.

From the perspective of engineering principles, the unit coefficient of performance COP is reflected as the heat exchange efficiency of the air-conditioning system 100. When the unit performance is optimal, the ratio of the heat exchange amount of the entire air-conditioning system 100 (which can be reflected by a difference between the entering water temperature and the leaving water temperature) to the current of the compressor 102 is the largest. It can be understood that when the unit performance is optimal, in a case that the working voltage of the compressor 102 remains unchanged, a larger heat exchange amount can be achieved through a smaller electrical energy loss (small current).

FIG. 6 is a structural block diagram of the control apparatus 114 shown in FIG. 1, showing main components of the control apparatus 114. The control apparatus 114 can store and execute programs shown in the flows shown in FIGS. 4A-4B, and store and access parameters required by the flows shown in FIGS. 4A-4B.

As shown in FIG. 6, the control apparatus 114 comprises a bus 602, a processor 604, a memory 606, an input interface 608, and an output interface 610. The processor 604, the memory 606, the input interface 608 and the output interface 610 are connected to the bus 602. The processor 604 can read a program (or instruction) from the memory 606 and execute the program (or instruction) to process data. The processor 604 may also write data or programs (or instruction) into the memory 606. The memory 606 stores the program (instruction) or the data. By executing the instruction in the memory 606, the processor 604 may control the operation of the memory 606, the input interface 608 and the output interface 610. In the present application, the memory 606 can store the adiabatic constants of the media of the common refrigerants of Table 1 mentioned above, the m value index table of Table 2, the index table of the volume ratio corrected value $\delta_m$ under different working conditions, and programs and parameters required by the process shown in Fig. 4A to Fig. 4B.

The input interface 608 is configured to be in communication connection to the environmental temperature sensor 130, the entering water temperature sensor 126, the leaving water temperature sensor 128, the system suction pressure sensor 122, the system discharge pressure sensor 124 and the sliding valve displacement sensor 234 through connections 632, 634, 636, 638, 640, 642 to receive the pressure and/or temperature parameters of each sensor, convert the data of these parameters into signals identifiable by the processor 604 and store the signals in the memory 606.

The processor 604 is configured to generate a sliding valve position adjustment signal according to the programs and various parameters stored in the memory 606.

The output interface 610 is in communication connection to the driving apparatus 233 of the compressor 102 through connection 644. By executing the program in the memory 606, the control apparatus 114 outputs the sliding valve position adjustment signal to the driving apparatus 233 through the output interface 610, thereby controlling the driving apparatus 233 to adjust the position of the sliding valve 232.

The air-conditioning system of the present application comprises but not limited to the following advanced technical effects:

First, in an air-conditioning refrigeration cycle system with an economizer, at the same position of the sliding valve, the gas density or pressure of the discharge chamber of the compressor is greater than that of an air-conditioning refrigeration cycle system without an economizer. If the internal volume ratio of the compressor is consistent with the external volume ratio of the air-conditioning system, over-compression of the compressor may be caused, that is, the final discharge pressure of the compressor is greater than the pressure of a discharge tube of a refrigeration unit, thereby resulting in low operating efficiency of the compressor. Therefore, the position of the sliding valve needs to be adjusted according to the corrected internal volume ratio of the compressor, so that the current unit coefficient of performance and the operating efficiency are highest. In the present application, the optimal operating efficiency of the compressor is tested through a mode of parameter approximation, a volume ratio corrected value at which the compressor is operated at the optimal efficiency is reversely derived, and the obtained volume ratio corrected value under the working condition is stored in the control apparatus for direct calling and use under the same working condition in the future, so that the overall performance of the unit reaches the highest.

Second, the air-conditioning refrigeration cycle system of the present application may eliminate the over-compression state of the compressor after the economizer is turned on, and can reduce the unit operation noise. The over-compression state is caused by an inappropriate position of the sliding valve of the compressor, and the position of the sliding valve is obtained by making the internal volume ratio of the compressor equal to the external volume ratio of the air-conditioning system.

Third, the air-conditioning refrigeration cycle system of the present application may eliminate the over-compression state of the compressor after the economizer is turned on, thereby reducing the vibration of a unit pipeline.

Fourth, the air-conditioning refrigeration cycle system of the present application may eliminate the over-compression state of the compressor after the economizer is turned on, thereby prolonging the service life of the compressor and the unit and increasing the adiabatic efficiency of the compressor.

Fifth, in the present application, the optimal internal volume ratios of different models of compressors (comprising compressors with different displacements and different air replenishing pressures) under various working conditions can be independently calculated, which may effectively avoid the influences of manufacturing differences and actual installation environment differences between independent compressors on unit control, so that each unit may be controlled at an optimal performance point.

Although the present disclosure has been described in conjunction with the examples of embodiments outlined above, various alternatives, modifications, variations, improvements and/or substantial equivalents, whether known or foreseeable now or soon, may become apparent to those of ordinary skill in the art. Accordingly, the examples of embodiments of the present disclosure set forth above are intended to be illustrative rather than restrictive. Various changes may be made without departing from the spirit or scope of the present disclosure. Accordingly, the present disclosure is intended to embrace all known or earlier developed alternatives, modifications, variations, improvements and/or substantial equivalents. The technical effects and technical problems in the specification are exemplary rather than restrictive. It should be noted that the embodiments described in the specification may have other technical effects and may solve other technical problems.

## Claims

1. A control system (100), the control system (100) being configured to control an air-conditioning system which has a system volume ratio ($V_{is}$) under a working condition, wherein the control system (100) comprises:

    a compressor (102), wherein the compressor (102) comprises a sliding valve (232) having a plurality of sliding positions, and one sliding position of the plurality of sliding positions of the sliding valve (232) corresponds to one internal volume ratio of the compressor (102); and
    a control apparatus (114), wherein under the working condition, the control apparatus (114) is configured to:

    acquire a volume ratio corrected value under the working condition;
    acquire an optimal internal volume ratio of the compressor (102) according to the volume ratio corrected value and the system volume ratio ($V_{is}$); and
    adjust a sliding position of the sliding valve (232) according to the optimal internal volume ratio of the compressor (102).

2. The control system according to claim 1, wherein the control system (100) further comprises:
   a plurality of sensors (122, 124, 126, 128, 130), wherein the plurality of sensors (122, 124, 126, 128, 130) determine the working condition and the system volume ratio ($V_{is}$).

3. The control system according to claim 2, wherein the control system (100) further comprises:

    an evaporator (112), wherein the evaporator (112) is fluidically connected to the compressor (102);
    wherein the plurality of sensors (122, 124, 126, 128, 130) comprise:

    an entering water temperature sensor (126), wherein the entering water temperature sensor (126) is configured to detect an entering water temperature ($T_{ew}$) of the evaporator (112);
    a leaving water temperature sensor (128), wherein the leaving water temperature sensor (128) is configured to detect a leaving water temperature ($T_{lw}$) of the evaporator (112); and

an environmental temperature sensor (130), wherein the environmental temperature sensor (130) is configured to detect an environmental temperature ($T_e$) of the control system (100).

4.  The control system according to claim 3, wherein:

    the compressor (102) further comprises a screw, and the control apparatus (114) is configured to be capable of acquiring a rotational speed of the screw; and
    the control apparatus (114) determines the working condition from the environmental temperature ($T_e$), the entering water temperature ($T_{ew}$), the leaving water temperature ($T_{lw}$), and the rotational speed of the screw that are measured.

5.  The control system according to claim 3, wherein the plurality of sensors (122, 124, 126, 128, 130) further comprise:

    a system suction pressure sensor (122), wherein the system suction pressure sensor (122) is configured to detect a suction pressure ($P_s$) of the control system (100); and
    a system discharge pressure sensor (124), wherein the system discharge pressure sensor (124) is configured to detect a discharge pressure ($P_d$) of the control system (100), wherein
    the control apparatus (114) determines the system volume ratio ($V_{is}$) from the suction pressure ($P_s$) and the discharge pressure ($P_d$) that are measured.

6.  The control system according to claim 5, wherein:

    the control apparatus (114) is further configured to be capable of acquiring a current parameter ($I_c$) of the compressor (102), and
    a coefficient of performance (COP) of the air-conditioning system can be acquired according to the current parameter ($I_c$), the entering water temperature ($T_{ew}$), and the leaving water temperature ($T_{lw}$),
    wherein when the compressor (102) is at the optimal internal volume ratio, the coefficient of performance (COP) of the air-conditioning system is maximized.

7.  The control system according to claim 6, wherein the control system (100) further comprises:

    an economizer (106), wherein the economizer (106) is fluidically connected to the compressor (102);
    wherein when the economizer (106) is in an off-state, an optimal volume ratio is equal to the system volume ratio ($V_{is}$).

8.  The control system according to claim 7, wherein:
    when the economizer (106) is in an on-state, it is determined whether the control apparatus (114) has stored therein the volume ratio corrected value corresponding to the working condition.

9.  The control system according to claim 8, wherein:
    if the control apparatus (114) has stored therein the volume ratio corrected value corresponding to the working condition, the optimal internal volume ratio is acquired according to the volume ratio corrected value and the system volume ratio, and a sliding position of the sliding valve (232) is adjusted according to the optimal internal volume ratio.

10. The control system according to claim 8, wherein:
    if the control apparatus (114) hasn't stored therein the volume ratio corrected value corresponding to the working condition, the volume ratio corrected value is acquired by the following steps:

    S01, setting a first temporary volume ratio corrected value ($\delta_{m(j)}$), adjusting a sliding position of the sliding valve (232) according to the first temporary volume ratio corrected value ($\delta_{m(j)}$), and after the air-conditioning system operates for a period of time, acquiring a coefficient of performance ($COP_{m(j)}$) of the air-conditioning system;
    S02, reducing the first temporary volume ratio corrected value ($\delta_{m(j)}$) to obtain a second temporary volume ratio corrected value ($\delta_{m(j+1)}$), adjusting a sliding position of the sliding valve (232) according to the second temporary volume ratio corrected value ($\delta_{m(j+1)}$), and after the air-conditioning system operates for the period of time, acquiring a coefficient of performance ($COP_{m(j+1)}$) of the air-conditioning system;
    S03, if a unit coefficient of performance ($COP_{m(j+1)}$) acquired in step S02 is less than a unit coefficient of performance ($COP_{m(j)}$) acquired in step S01, assigning the first temporary volume ratio corrected value ($\delta_{m(j)}$) to the volume ratio corrected value;

S04, if a unit coefficient of performance ($COP_{m(j+1)}$) acquired in step S02 is greater than a unit coefficient of performance ($COP_{m(j)}$) acquired in step S01, reducing the second temporary volume ratio corrected value ($\delta_{m(j)}$) to obtain a third temporary volume ratio corrected value ($\delta_{m(j+2)}$), adjusting a sliding position of the sliding valve (232) according to the third temporary volume ratio corrected value ($\delta_{m(j+2)}$), and after the air-conditioning system operates for the period of time, acquiring a coefficient of performance ($COP_{m(j+2)}$) of the air-conditioning system;
S05, if a unit coefficient of performance ($COP_{m(j+2)}$) acquired in step S04 is less than a unit coefficient of performance ($COP_{m(j+1)}$) acquired in step S02, assigning the second temporary volume ratio corrected value ($\delta_{m(j+1)}$) to the volume ratio corrected value, and
S06, if a unit coefficient of performance ($COP_{m(j+2)}$) acquired in step S04 is greater than a unit coefficient of performance ($COP_{m(j+1)}$) acquired in step S02, repeating step S04 until a unit coefficient of performance ($COP_{m(n+1)}$) acquired in a subsequent repetition is less than a unit coefficient of performance ($COP_{m(n)}$) acquired in a preceding repetition prior to the subsequent repetition, and assigning a temporary volume ratio corrected value ($\delta_{m(n)}$) obtained in the preceding repetition to the volume ratio corrected value.

11. The control system according to claim 10, wherein the compressor (102) further comprises:

a suction port (152), a replenishing port (154), a discharge port (156), and a sliding valve displacement sensor (234),
wherein the control apparatus (114) adjusts a sliding position of the sliding valve (232) through the sliding valve displacement sensor (234), and
wherein the economizer (106) is connected to the compressor (102) through the replenishing port (154).

12. The control system according to claim 11, wherein the control system (100) further comprises:

a suction pipe (142), the suction pipe (142) being connected to the suction port (152) of the compressor (102), wherein the system suction pressure sensor (122) is arranged at the suction pipe (142), and the evaporator (112) is connected to the compressor (102) through the suction pipe (142);
a discharge pipe (144), the discharge pipe (144) being connected to the discharge port (156) of the compressor (102), wherein the system discharge pressure sensor (124) is arranged at the discharge pipe (144);
a condenser (104), wherein the condenser (104) is connected to the compressor (102) through the discharge pipe (144), and the condenser (104) is in fluid communication with the economizer (106);
an economizer expansion valve (108), wherein the economizer expansion valve (108) is in fluid communication with the condenser (104) and the economizer (106); and
a main expansion valve (110), wherein the main expansion valve (110) is in fluid communication with the evaporator (112) and the economizer (106).

13. A control method for controlling a compressor (102) in a control system (100), the compressor (100) comprising a sliding valve (232), the control system (100) comprising a control apparatus (114), the control method (100) comprising the following steps:

determining a working condition and a system volume ratio ($V_{is}$) of the control system (100);
acquiring a volume ratio corrected value under the working condition;
acquiring an optimal internal volume ratio of the compressor (102) according to the volume ratio corrected value and the system volume ratio ($V_{is}$); and
adjusting a sliding position of the sliding valve (232) according to the optimal internal volume ratio of the compressor (102).

14. The control method according to claim 13, wherein the control system (100) further comprises:
a plurality of sensors, wherein the working condition and the system volume ratio ($V_{is}$) of the control system (100) is determined through the plurality of sensors.

15. The control method according to claim 14, wherein the control system (100) further comprises:

an evaporator (112), wherein the evaporator (112) is fluidically connected to the compressor (102);
wherein the plurality of sensors comprise:

an entering water temperature sensor (126), wherein the entering water temperature sensor (126) is configured to detect an entering water temperature ($T_{ew}$) of the evaporator (112);

a leaving water temperature sensor (128), wherein the leaving water temperature sensor (128) is configured to detect a leaving water temperature ($T_{lw}$) of the evaporator (112); and
an environmental temperature sensor (130), wherein the environmental temperature sensor (130) is configured to detect an environmental temperature ($T_e$) of the control system (100).

16. The control method according to claim 15, wherein:

the compressor (102) further comprises a screw, and the control apparatus (114) is configured to be capable of acquiring a rotational speed of the screw; and
the control apparatus (114) determines the working condition from the environmental temperature ($T_e$), the entering water temperature ($T_{ew}$), the leaving water temperature ($T_{lw}$), and the rotational speed of the screw that are measured.

17. The control method according to claim 15, wherein the plurality of sensors further comprise:

a system suction pressure sensor (122), wherein the system suction pressure sensor (122) is configured to detect a suction pressure ($P_s$) of the control system (100); and
a system discharge pressure sensor (124), wherein the system discharge pressure sensor (124) is configured to detect a discharge pressure ($P_d$) of the control system (100), wherein
the control apparatus (114) determines the system volume ratio ($V_{is}$) from the suction pressure ($P_s$) and the discharge pressure ($P_d$) that are measured.

18. The control method according to claim 17, wherein:

the control apparatus (114) is further configured to be capable of acquiring a current parameter ($I_c$) of the compressor (102), and
a coefficient of performance (COP) of an air-conditioning system can be acquired according to the current parameter ($I_c$), the entering water temperature ($T_{ew}$), and the leaving water temperature ($T_{lw}$),
wherein when the compressor (102) is at the optimal internal volume ratio, the coefficient of performance (COP) of the air-conditioning system is maximized.

19. The control method according to claim 18, wherein the control system (100) further comprises:

an economizer (106), wherein the economizer (106) is fluidically connected to the compressor (102);
wherein when the economizer (106) is in an off-state, an optimal volume ratio is equal to the system volume ratio ($V_{is}$).

20. The control method according to claim 19, wherein:
when the economizer (106) is in an on-state, it is determined whether the control apparatus (114) has stored therein the volume ratio corrected value corresponding to the working condition.

21. The control method according to claim 20, wherein:
if the control apparatus (114) has stored therein the volume ratio corrected value corresponding to the working condition, the optimal internal volume ratio is acquired according to the volume ratio corrected value and the system volume ratio, and a sliding position of the sliding valve (232) is adjusted according to the optimal internal volume ratio.

22. The control method according to claim 20, wherein:
if the control apparatus (114) hasn't stored therein the volume ratio corrected value corresponding to the working condition, the volume ratio corrected value is acquired by the following steps:

S01, setting a first temporary volume ratio corrected value ($\delta_{m(j)}$), adjusting a sliding position of the sliding valve (232) according to the first temporary volume ratio corrected value ($\delta_{m(j)}$), and after the air-conditioning system operates for a period of time, acquiring a coefficient of performance ($COP_{m(j)}$) of the air-conditioning system;
S02, reducing the first temporary volume ratio corrected value ($\delta_{m(j)}$) to obtain a second temporary volume ratio corrected value ($\delta_{m(j+1)}$), adjusting a sliding position of the sliding valve (232) according to the second temporary volume ratio corrected value ($\delta_{m(g+1)}$), and after the air-conditioning system operates for the period of time, acquiring a coefficient of performance ($COP_{m(j+1)}$) of the air-conditioning system;
S03, if a unit coefficient of performance ($COP_{m(j+1)}$) acquired in step S02 is less than a unit coefficient of

performance ($COP_{m(j)}$) acquired in step S01, assigning the first temporary volume ratio corrected value ($\delta_{m(j)}$) to the volume ratio corrected value;

S04, if a unit coefficient of performance ($COP_{m(j+1)}$) acquired in step S02 is greater than a unit coefficient of performance ($COP_{m(j)}$) acquired in step S01, reducing the second temporary volume ratio corrected value ($\delta_{m(j)}$) to obtain a third temporary volume ratio corrected value ($\delta_{m(j+2)}$), adjusting a sliding position of the sliding valve (232) according to the third temporary volume ratio corrected value ($\delta_{m(j+2)}$), and after the air-conditioning system operates for the period of time, acquiring a coefficient of performance ($COP_{m(j+2)}$) of the air-conditioning system;

S05, if a unit coefficient of performance ($COP_{m(j+2)}$) acquired in step S04 is less than a unit coefficient of performance ($COP_{m(j+1)}$) acquired in step S02, assigning the second temporary volume ratio corrected value ($\delta_{m(j+1)}$) to the volume ratio corrected value, and

S06, if a unit coefficient of performance ($COP_{m(j+2)}$) acquired in step S04 is greater than a unit coefficient of performance ($COP_{m(j+1)}$) acquired in step S02, repeating step S04 until a unit coefficient of performance ($COP_{m(n+1)}$) acquired in a subsequent repetition is less than a unit coefficient of performance ($COP_{m(n)}$) acquired in a preceding repetition prior to the subsequent repetition, and assigning a temporary volume ratio corrected value ($\delta_{m(n)}$) obtained in the preceding repetition to the volume ratio corrected value.

23. The control method according to claim 22, wherein the compressor (102) further comprises:

a suction port (152), a replenishing port (154), a discharge port (156), and a sliding valve displacement sensor (234),

wherein the control apparatus (114) adjusts a sliding position of the sliding valve (232) through the sliding valve displacement sensor (234), and

wherein the economizer (106) is connected to the compressor (102) through the replenishing port (154).

24. The control method according to claim 23, wherein the control system (100) further comprises:

a suction pipe (142), the suction pipe (142) being connected to the suction port (152) of the compressor (102), wherein the system suction pressure sensor (122) is arranged at the suction pipe (142), and the evaporator (112) is connected to the compressor (102) through the suction pipe (142);

a discharge pipe (144), the discharge pipe (144) being connected to the discharge port (156) of the compressor (102), wherein the system discharge pressure sensor (124) is arranged at the discharge pipe (144);

a condenser (104), wherein the condenser (104) is connected to the compressor (102) through the discharge pipe (144), and the condenser (104) is in fluid communication with the economizer (106);

an economizer expansion valve (108), wherein the economizer expansion valve (108) is in fluid communication with the condenser (104) and the economizer (106); and

a main expansion valve (110), wherein the main expansion valve (110) is in fluid communication with the evaporator (112) and the economizer (106).

25. A compressor (102), wherein the compressor is the compressor (102) according to any one of the preceding claims 1-12.

26. A compressor (102), wherein the compressor is adjusted by the control method according to any one of the preceding claims 13-24.

100

104

124

156

143    144

X    X    102

154

106    108    152    142    114

X    122

Y    130

110    112    Y

Y    Y    140

128    126

148    146

Low-temperature
water

Ambient-temperature
water source

Fig. 1

Fig. 2

Fig. 3

402

Start

404

Collect data, and calculate a
system volume ratio $V_{is}$

406

Is an economizer
is turned on? — No → Turn to step 430

Yes

408

Acquire a current working parameter value
m according to an m value index table

410

Whether a volume
ratio corrected value δm
corresponding to the current
working condition parameter
value m is stored in
a memory — Yes → Turn to step 428

No

412

Make an initial $\delta_{m(j)}=1.0$, wherein j=0, 1,2,...,n,
and calculate a current internal volume ratio

$$V_{ic(j)}=\delta_{m(j)} \times V_{is}$$

414

Adjust the position of a sliding valve according to
the current internal volume ratio $V_{ic(j)}$

416

After five minutes of continuous operation,
calculate a current unit coefficient of performance

$$COP_{m(j)}=(T_{ew}-T_{lw})/I_c$$

Turn to step 418

Fig. 4A

From step 416

Make an initial $\delta_{m(j+1)}=\delta_{m(j)}-0.01$, wherein j=0, 1,2,...,n, and calculate a current internal volume ratio

$$V_{ic(j+1)}=\delta_{m(j+1)}\times V_{is}$$

418

Adjust the position of a sliding valve according to the current internal volume ratio $V_{ic(j+1)}$

420

After five minutes of continuous operation, calculate a current unit coefficient of performance

$$COP_{m(j+1)}$$

422

Whether $COP_{m(j+1)}$ is less than $COP_{m(j)}$

424

No

From step 410

Make an optimal volume ratio corrected value $\delta_{me}=\delta_{m}$

428

Yes

Make an optimal volume ratio corrected value $\delta_{me}=\delta_{m(j)}$ and store the optimal volume ratio corrected value $\delta_{me}$ under the working condition parameter value m in a memory

426

From step 406

Make an optimal volume ratio corrected value $\delta_{me}=1$

430

Calculate an optimal internal volume ratio of the compressor

432

Adjust the position of the sliding valve according to the optimal internal volume ratio $V_{ice}$

434

Shut down?

436

No → Turn to step 404

Yes

End

438

Fig. 4B

19

Fig. 5

EP 4 692 555 A1

602

Processor — 604 — 114

Memory (program) — 606
(Table 1)
(Table 2)
($\delta_m$ value index
table)

608

632

Input
interface

Environmental temperature
sensor output

634

Entering water temperature
sensor output

636

Leaving water temperature
sensor output

638

System suction pressure
sensor output

640

System discharge pressure
sensor output

642

Sliding valve displacement
sensor output

610

Output
interface

Sliding valve position
adjustment signal

644

Driving apparatus

Fig. 6

## INTERNATIONAL SEARCH REPORT

| International application No. |
| --- |
| **PCT/CN2024/085056** |

| A. | CLASSIFICATION OF SUBJECT MATTER |
| --- | --- |

F04C28/12(2006.01)i; F25B1/047(2006.01)i

According to International Patent Classification (IPC) or to both national classification and IPC

| B. | FIELDS SEARCHED |
| --- | --- |

Minimum documentation searched (classification system followed by classification symbols)

IPC: F04C, F25B

Documentation searched other than minimum documentation to the extent that such documents are included in the fields searched

Electronic data base consulted during the international search (name of data base and, where practicable, search terms used)

CNTXT: ENTXTC; VEN; CJFD: 压缩机, 滑阀, 滑块, 容积比, 压力, 温度, compressor, slider, volume, pressure

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115628216 A (YORK (WUXI) AIR CONDITIONING AND REFRIGERATION EQUIPMENT CO., LTD. et al.) 20 January 2023 (2023-01-20) description, specific embodiments, and figures 1-4C | 1-9, 13-21, 25-26 |
| PX | CN 116292302 A (YORK GUANGZHOU AIR CONDITIONING AND REFRIGERATION CO., LTD. et al.) 23 June 2023 (2023-06-23) claims 1-26 | 1-26 |
| A | CN 102536823 A (INDUSTRIAL TECHNOLOGY RESEARCH INSTITUTE) 04 July 2012 (2012-07-04) entire document | 1-26 |
| A | CN 108332464 A (GREE ELECTRIC APPLIANCES, INC. OF ZHUHAI) 27 July 2018 (2018-07-27) entire document | 1-26 |
| A | CN 114109823 A (SHANGHAI LYUZHENG ENERGY TECHNOLOGY CO., LTD.) 01 March 2022 (2022-03-01) entire document | 1-26 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 May 2024** | **23 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/085056**

| C. | DOCUMENTS CONSIDERED TO BE RELEVANT | |
|---|---|---|
| Category* | Citation of document, with indication, where appropriate, of the relevant passages | Relevant to claim No. |
| A | JP 2005194926 A (KOBE STEEL, LTD.) 21 July 2005 (2005-07-21)<br>entire document | 1-26 |

Form PCT/ISA/210 (second sheet) (July 2022)

**INTERNATIONAL SEARCH REPORT**
Information on patent family members

International application No.

**PCT/CN2024/085056**

| Patent document cited in search report | | | Publication date (day/month/year) | Patent family member(s) | | | Publication date (day/month/year) |
|---|---|---|---|---|---|---|---|
| CN | 115628216 | A | 20 January 2023 | None | | | |
| CN | 116292302 | A | 23 June 2023 | None | | | |
| CN | 102536823 | A | 04 July 2012 | TW | 201226822 | A | 01 July 2012 |
| | | | | TWI | 400415 | B | 01 July 2013 |
| CN | 108332464 | A | 27 July 2018 | None | | | |
| CN | 114109823 | A | 01 March 2022 | None | | | |
| JP | 2005194926 | A | 21 July 2005 | None | | | |

Form PCT/ISA/210 (patent family annex) (July 2022)